# EUROPÄISCHE PATENTSCHRIFT

(11) **EP 2 743 554 B1**
(45) Veröffentlichungstag und Bekanntmachung des Hinweises auf die Patenterteilung: **28.11.2018**
(21) Anmeldenummer: 13005650.0
(22) Anmeldetag: 05.12.2013
(51) Int. Cl.: F16K 31/46, F16K 31/04, E03B 9/02

(54) **Betätigungsschlüssel mit Antrieb**
Actuating key with driver
Clé d'actionnement avec entraînement

(30) Priorität: 11.12.2012 DE 102012024123
(43) Veröffentlichungstag der Anmeldung: 18.06.2014
(73) Patentinhaber: KETTLER GMBH, 46286 Dorsten (DE)
(72) Erfinder: Buhla, Michael, 46348 Raesfeld (DE)
(74) Vertreter: Schulte & Schulte

(56) Entgegenhaltungen:
- DE-A1-102009 006 836
- US-A- 5 810 051
- US-A1- 2004 045 414
- US-B1- 7 334 606

## Beschreibung

Die Erfindung betrifft einen Schlüssel zum Verstellen von Absperrventilen, Schiebern und ähnlichen Verschlüssen von im Erdreich verlegten Rohrleitungen, mit einem mit einem Antrieb versehenen, eine Schlüsselstange aufweisenden Gestänge, wobei die Schlüsselstange an ihrer Unterseite eine Kuppelmuffe zum Anschluss an das Absperrventil etc. aufweist und der Antrieb in einem in die Schlüsselstange integrierten Gehäuse angeordnet ist.

Derartige Betätigungsschlüssel finden Einsatz zum Öffnen und Schließen von Absperrventilen, Schiebern und ähnlichen Verschlüssen unterirdisch verlegter Wasser- oder Gasleitungen. Das Gestänge weist eine Schlüsselstange sowie eine Querstange auf, bei deren Drehen die am unteren Ende der Schlüsselstange positionierte Kuppelmuffe ein Drehmoment auf Ventil, Schieber oder ein vergleichbares Anschlussbauteil zu dessen Öffnen oder Schließen ausübt. Diese Betätigung ist häufig mit besonderem manuellen Aufwand verbunden, zumal sich solche Verschlüsse gerade nach einem längeren Zeitraum der Nichtbenutzung erfahrungsgemäß nur mit äußerst hohem Aufwand öffnen bzw. schließen lassen. Bekannt sind deswegen bereits mit einem Motor angetriebene Schlüssel, die letztlich vom Aufbau her an Bohrmaschinen erinnern, d. h. an ein ohnehin bereits vergleichsweise kompaktes Gerät wird eine Schlüsselstange mit endseitiger Kuppelmuffe angesetzt. Das Drehmoment muss also von dem Antrieb am oberen Ende der Schlüsselstange über selbige auf die Kuppelmuffe an ihrem unteren Ende übertragen werden. Die notwendige Überbrückung dieser Länge bringt zunächst einen erheblichen Energiebedarf mit sich. Die Vorrichtung muss zwangsläufig an die Netzspannung angeschlossen werden. Es kommt hinzu, dass es bei solchen Vorrichtungen notwendig ist, das Drehmoment aufzunehmen, was wiederum eine Art Gestell erfordert, in das der massive bohrmaschinenartige Antrieb samt Schlüsselstange darunter eingehängt wird. Das wiederum macht die Handhabung wegen der Installation des Gestells aufwendig, umständlich und sogar gefahrenträchtig. Bei Überschreitung bestimmter Grenzdrehmomente ist deswegen der Einsatz eines zweiten Bedieners vorgeschrieben. Bei der US 2004/0045414 ist der Antrieb etwa auf Hüfthöhe der beiden Bediener positioniert und damit sicherlich zwei Meter von der Kuppelmuffe entfernt. Das Drehmoment muss also von diesem Antrieb über das komplette Gestänge auf die Kuppelmuffe an dessen unterem Ende übertragen werden. Dies führt nicht nur zu einem erheblichen Energiebedarf, sondern die Vorrichtung muss zwangsläufig auch an die Netzspannung angeschlossen werden. Es kommt hinzu, dass es bei der Vorrichtung gemäß der US 2004/0045414 notwendig ist, das Drehmoment aufzunehmen, was eine Art Gestell bzw. das Gegenhalten durch die beiden Bediener erfordert, um den bohrmaschinenartigen Antrieb überhaupt einsetzen zu können. Das macht die Handhabung aufwendig, umständlich, energieintensiv und gefahrenträchtig.

Damit stellt sich der vorliegenden Erfindung die Aufgabe, einen Betätigungsschlüssel zum Verstellen von Absperrventilen, Schiebern und ähnlichen Verschlüssen von im Erdreich verlegten Rohrleitungen zu schaffen, der sich durch einfache, sichere Handhabung und niedrigen Energieaufwand auszeichnet.

Diese Aufgabe wird dadurch gelöst, dass der Antrieb in einem in die Schlüsselstange integrierten Gehäuse angeordnet ist, wobei sich beidseitig des Gehäuses ein Gestängeabschnitt befindet.

Ein besonders einfach aufzubauender und handhabbarer sowie sich durch geringen Energiebedarf auszeichnender Betätigungsschlüssel weist einen in einem Gehäuse angeordneten Antrieb auf. Das den Antrieb umgebende Gehäuse ist dabei in die Schlüsselstange so integriert, dass es gewissermaßen einen Teil derselben, einen Abschnitt der Schlüsselstange bildet. Der Antrieb wirkt damit unmittelbar oder mittelbar auf die Kuppelmuffe ein und kann entsprechend klein bauen. Nur ein denkbar kleiner und leichter Teil des Gestänges muss zur Betätigung der Armatur oder einer auf dieser positionierten Einbaugarnitur in Rotation versetzt werden, es muss nur ein vergleichsweise geringes Drehmoment aufgebracht werden. Damit ist erstmals der Einsatz eines die Handhabung des Schlüssels vereinfachenden Akkus zur Energieversorgung möglich.

Es ist also eine Art neuer Baueinheit in Form des den Antrieb beherbergenden Gehäuses geschaffen, die nach oben mit der Schlüsselstange und nach unten mit der Kuppelmuffe jeweils verbunden ist. Was das Aggregat Antrieb betrifft, ist vorgesehen, dass in dem Gehäuse Motor, Getriebe, Steuereinheit, Energieversorgung und/oder GPS-Empfänger untergebracht sind. Letzterer dient zur Identifizierung der jeweiligen Armatur. Der Antrieb wird über einen an dem Schlüssel installierten Schalter oder über eine Fernbedienung betätigt.

Zur besseren Handhabung ist vorgesehen, dass das Gehäuse lösbar mit der Schlüsselstange und/oder der Kuppelmuffe verbunden ist. Dies ist auch insofern als vorteilhaft anzusehen, als Antrieb bzw. Gehäuse damit nachrüstbar sind, d. h. bereits im Einsatz befindliche Gestänge können um einen solchen Antrieb auf denkbar einfache Weise ergänzt werden.

Zum Anschluss nach oben an die Schlüsselstange und nach unten an die Kuppelmuffe wird vorgeschlagen, dass das Gehäuse an beiden Stirnseiten einen Gestängeabschnitt aufweist, der dann zur Verbindung mit der Schlüsselstange bzw. der Kuppelmuffe dient.

Übliche Schlüsselstangen weisen in der Regel einen Mehrkant, vorzugsweise einen Vierkant auf, sodass auch die Gestängeabschnitte als Mehrkant oder als Aufnahme für einen Mehrkant ausgebildet sind, d. h. z. B., dass der obere Gestängeabschnitt als Mehrkant und der untere als Aufnahme für einen solchen ausgebildet ist, der dann gemeinsam mit der Kuppelmuffe mit der Aufnahme verbunden wird. In Abhängigkeit von der Geometrie des zu öffnenden oder zu schließenden Ventils etc. kann der passende Typ Kuppelmuffe ausgewählt und mit dem Mehrkant als Baugruppe mit der gehäuseseitigen Aufnahme verbunden werden.

Es wurde bereits angesprochen, dass der Antrieb besonders direkt und kurz ist. In diesem Sinne ist der Vorschlag zu verstehen, wonach der Antrieb auf den unteren Gestängeabschnitt einwirkt, dessen maßgebliche Funktion darin besteht, die Verbindung zur Kuppelmuffe herzustellen, sodass dieser Gestängeabschnitt besonders klein bauen kann. Die damit durch den Antrieb in Rotation zu versetzenden Bauteile beschränken sich zahlenmäßig wie in ihren Ausmaßen auf ein Minimum.

Eine weitere Ausführungsform der Erfindung sieht vor, dass Gehäuse und Gestänge und/oder Kuppelmuffe über eine Rastverbindung oder Steckverbindung miteinander verbunden sind. Nach dem Einsatz leicht lösbare Rast- oder Steckverbindungen befinden sich hierzu zwischen Schlüsselstange und oberem Gestängeabschnitt und/oder zwischen unterem Gestängeabschnitt und dem Anschluss an die Kuppelmuffe.

Erwähnt wurde bereits, dass die günstige Positionierung des Antriebs ein ansonsten notwendiges Gestell zum Abfangen des Drehmomentes entbehrlich macht. Stattdessen ist daran gedacht, dass der Schlüssel mit einer Verdrehsicherung ausgerüstet ist, welche bei Betätigung des Antriebs ein Mitdrehen des Gehäuses bzw. des Schlüssels verhindert. Eine solche Verdrehsicherung baut ebenfalls klein und kann einfach installiert und wieder demontiert werden, zumal sie aus den angesprochenen Gründen eben nur ein deutlich kleineres Drehmoment aufnehmen können muss. Konkret genügt es eben bei der erfindungsgemäßen Lösung, das Drehen des den Antrieb umgebenden Gehäuses dank einer solchen Verdrehsicherung an dem entscheidenden Punkt zu verhindern, so dass es zu einem Mitdrehen insbesondere des Gestänges erst gar nicht kommen kann.

In diesem Zusammenhang ist daran gedacht, dass die Verdrehsicherung einen Klemmring aufweist, dessen Innenkonturen mit den Außenkonturen des Gehäuses korrespondieren. Zweckmäßigerweise ist das Gehäuse hierzu als Polygon, z. B. als Fünfeck, ausgebildet. Die Innenkonturen des Klemmrings als Teil der Verdrehsicherung sind entsprechend ebenfalls als korrespondierendes Polygon ausgebildet.

Denkbar ist, dass die Verdrehsicherung seitlich auf das den Antrieb beherbergende Gehäuse aufgesetzt bzw. -geklemmt wird. Besser ist es, wenn die Verdrehsicherung in Richtung Längsachse des Gestänges auf das Gehäuse aufschiebbar oder aufsetzbar ausgebildet ist. Die Verdrehsicherung wird also mit dem Klemmring in Richtung der Längsachse des Gestänges, d. h. etwa von unten auf das Gehäuse aufgeschoben, bis der Klemmring seine Position an dem Gehäuse eingenommen hat.

Ergänzend dazu sieht eine Verbesserung vor, dass die Verdrehsicherung eine Trittfläche z. B. mit im Wesentlichen rechteckigem Querschnitt aufweist. D. h. der Bediener fixiert die Verdrehsicherung gewissermaßen durch Aufsatz eines Fußes und Verlagerung zumindest eines Teils seines Körpergewichts auf die Trittfläche, sodass sich die Verdrehsicherung samt Trittfläche eben nicht mehr in ungewollter Weise verdrehen lassen kann. Die Trittfläche kann an ihrer Unterseite zusätzlich so ausgebildet sein, dass ihre Haftung auf dem Untergrund verbessert wird, etwa durch Nägel, krallenartige Einbauten, eine an ihrer Unterseite fixierte Matte aus rutschfestem Material etc.

Eine weitere Ausführungsform sieht vor, dass der Schlüssel mit einer Sicherheitsschaltung zur Detektion einer unerwünschten Relativbewegung des Gehäuses ausgerüstet ist. Sollte es also beim Betrieb zu einer solchen (Mit-) Drehung des Gehäuses kommen, wird dies über einen Sensor festgestellt und ein entsprechendes Signal an die ebenfalls in dem Gehäuse untergebrachte Steuerung weitergeleitet, woraufhin ggf. die Stromversorgung unterbrochen wird. Wegen der hohen Drehmomente, die entstehen können, könnte es ansonsten zu einem unkontrollierten Umherschlagen des Schlüssels kommen, was gerade bei der Arbeit in unmittelbarer Nähe zum Straßenverkehr verheerende Konsequenzen mit sich bringen könnte. Bestehen solche Gefahren nicht, ist auch eine einfache Meldung über die unerwünschte Relativbewegung eventuell auch kabellos an ein externes Aggregat wie ein Display, ein Smartphone oder einen mobilen oder fest installierten Rechner realisierbar.

Immer wieder kommt es in Zusammenhang mit Verschlüssen an unterirdischen Rohrleitungen auch zu Problemen, weil nicht nachvollziehbar ist, ob ein Verschluss (vollständig) geöffnet oder (vollständig) geschlossen ist. Hier besteht ein erheblicher Bedarf an einer zuverlässigen Dokumentation, d. h. der Bediener sollte möglichst konkret wissen, mit welcher Armatur er es gerade zu tun hat und wie sich Öffnungs- und Schließzustand speziell an dieser verhalten. Es ist daher vorgesehen, dass der Schlüssel mit einer Speichereinheit zur Dokumentation der durchgeführten Umdrehungen und/oder Drehmomente ausgerüstet ist. Die Anzahl der Umdrehungen kann jeweils festgehalten und/oder der Drehmomentverlauf in geeigneter Weise dokumentiert werden.

Nach einer alternativen Lösung ist der Schlüssel mit einer Überwachungseinheit zur Erfassung akustischer Signale ausgerüstet. Über diese Einheit zur Erfassung der akustischen Signale wird festgestellt bzw. ausgewertet, ob und wenn, wie intensiv, im Bereich der Armatur Geräusche herrschen. Ein Mikrofon erfasst also z. B. ein Rauschen oder Zischen, was entweder dem Bediener als Information weiterzuleiten ist und/oder die Überwachungseinheit schließt selbst aufgrund des Feststellens dieses Geräusches auf den Öffnungszustand der Armatur mit entsprechend angeschlossener Signalgebung. Damit wird das zentrale Problem gelöst, Armaturen häufig ein vergleichsweise geringes Stück geöffnet sind und damit unbeabsichtigt Wasser eindringt. Die dabei entstehenden Geräusche werden nunmehr erfasst und ggf. ausgewertet.

Es wurde bereits angedeutet, dass es zweckmäßig ist, die ermittelten Daten extern auszuwerten, was sowohl für reine Informationssignale etwa über den Drehmomentenverlauf als auch Überwachungs- bzw. Alarmsignale etwa bei Relativbewegung zwischen Gehäuse und Gestänge gilt. Dass der Schlüssel mit einer als kabellose oder Verbindung über Kabel zu einem externen Aggregat dienenden Kommunikationseinheit ausgerüstet ist, bietet die Möglichkeit zur Kommunikation in beide Richtungen, d. h. zum Empfang bzw. zur Weiterleitung von Befehlen über ein externes Aggregat an die Steuereinheit, ebenso wie zur Weiterleitung von Messergebnissen an ein externes Aggregat. Der Bediener oder eine Leitstelle kann damit jederzeit über die Kommunikationseinheit Befehle an die Steuerung geben, außerdem besteht die Möglichkeit, sich auch jederzeit ein Bild über die ermittelten Daten zu verschaffen. Bei solchen externen Aggregaten ist an mobile oder stationäre Rechner und z. B. eine Bluetooth-Schnittstelle zur Kommunikationseinheit gedacht. Der Rechner wertet Messergebnisse aus und/oder macht sie für die jeweiligen Bediener oder Überwachungspersonal sichtbar.

Die Erfindung zeichnet sich insbesondere dadurch aus, dass ein verbesserter Antrieb für einen Schlüssel zum Verstellen von Absperrventilen, Leitungsschiebern und ähnlichen Verschlüssen von im Erdreich verlegten Rohrleitungen geschaffen ist. Der Antrieb der Kuppelmuffe als das Drehmoment auf das Absperrventil etc. übertragendes Bauteil erfolgt in besonders direkter Weise und über einen kurzen Weg. Hierfür ist nur ein denkbar kleiner und leichter Teil des Betätigungsschlüssels in Form des unterhalb des Gehäuses positionierten Gestängeabschnitts in Rotation zu versetzen. Das Drehmoment kann somit am oberen Ende des Betätigungsschlüssels, vorzugsweise an der Querstange, mit verhältnismäßig geringem Kraftaufwand ohne Hilfseinrichtungen abgefangen werden. Damit kann ein Akkumulator zur unabhängigen Energieversorgung eingesetzt werden. Drehende Teile befinden sich allein im Bereich der Straßenkappe, wo sie zugleich geschützt sind, was auch unter Sicherheitsaspekten als äußerst vorteilhaft anzusehen ist. Anstatt eines Gestells wird eine vergleichsweise einfach bauende Verdrehsicherung von unten oder seitlich auf die Schlüsselstange, genauer gesagt auf das Antriebsgehäuse aufgesetzt und klemmt dieses, was ggf. noch durch eine Verlagerung des Gewichts des Bedieners auf eine Trittfläche als Teil der Verdrehsicherung zu ergänzen ist. Der Antrieb baut besonders kompakt, weil er mit sämtlichen Aggregaten wie Motor, Getriebe, Steuereinheit, GPS-Empfänger, Akkumulator etc. in einem gesonderten Gehäuse untergebracht ist, das in Art eines Stangenabschnitts in die Schlüsselstange eingesetzt und damit auch leicht nachgerüstet werden kann. Zum Anschluss an die Schlüsselstange weist das Gehäuse entsprechende Gestängeabschnitte in Form eines Mehrkants oder eine Aufnahme für einen Mehrkant an der oberen und unteren Stirnseite auf. Die ohnehin vorhandene Stromversorgung kann in vorteilhafter Weise noch für weitere Zwecke genutzt werden. Gedacht ist dabei an eine Erfassung etwaiger unerwünschter Relativbewegungen des Gehäuses, an eine Speichereinheit zur Dokumentation durchgeführter Umdrehungen bzw. Drehmomente, an die Erfassung akustischer Signale (Rauschen), um auf den Öffnungs- bzw. Schließzustand der Armatur Rückschluss zu haben sowie an die Kommunikation mit externen Aggregaten zur Signalgebung, zur Identifikation der Armatur bzw. Auswertung der erhaltenen Daten.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: einen Betätigungsschlüssel in perspektivischer Ansicht,
- Figur 2: einen Betätigungsschlüssel in Seitenansicht,
- Figur 3: eine Explosionsdarstellung zu Figur 2,
- Figur 4: ein Gehäuse mit Gestängeabschnitten,
- Figur 5: eine andere Ansicht zu Figur 4,
- Figur 6: einen Betätigungsschlüssel mit Straßenkappe,
- Figur 7: ein Gehäuse mit Verdrehsicherung,
- Figur 8: einen Schlüssel mit Steckverbindung,
- Figur 9: ein Gehäuse mit Steckverbindung und
- Figur 10: ein Funktionsschema.

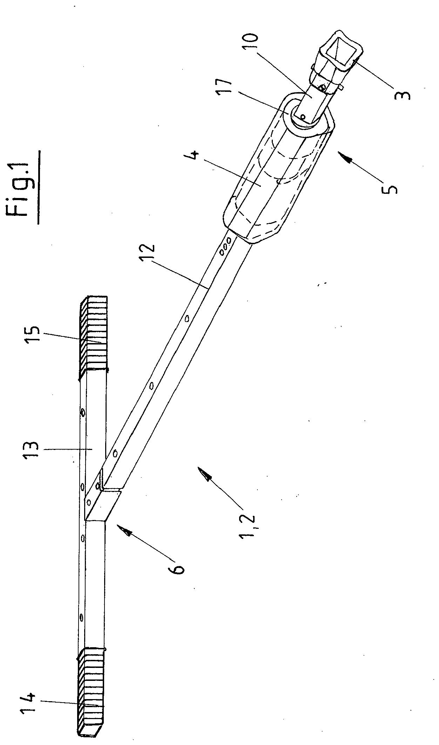

Figur 1 zeigt ein als Betätigungsschlüssel 1 ausgebildetes Gestänge 2 mit einer Schlüsselstange 12, die teleskopierbar oder anderweitig verlängerbar ausgebildet sein kann. An seiner Oberseite 6 weist das Gestänge 2 eine Querstange 13 mit endseitigen Handhaben 14 und 15 auf. An seiner Unterseite 5 befindet sich der in dem Gehäuse 4 untergebrachte Antrieb und schließlich die Kuppelmuffe 3 als Drehmoment übertragendes Bauteil, das auf eine Armatur, genauer gesagt auf ein Absperrventil, einen Leitungsschieber oder einen ähnlichen Verschluss oder eine darauf angeordnete Einbaugarnitur aufgesetzt wird. Das Gehäuse 4 ist samt dem Antrieb, zu dessen Aufnahme es dient, in die Schlüsselstange 12 integriert, bildet also gewissermaßen einen Abschnitt dieser Schlüsselstange 12. Gut erkennbar ist, dass das Gehäuse 4 samt Antrieb damit in unmittelbarer Nähe zur Kuppelmuffe 3 positioniert ist, sodass ausschließlich der an der unteren Stirnseite 17 des Gehäuses 4 positionierte, mit dem Bezugszeichen 10 versehene Gestängeabschnitt samt Kuppelmuffe 3 durch den Antrieb in Rotation versetzt wird.

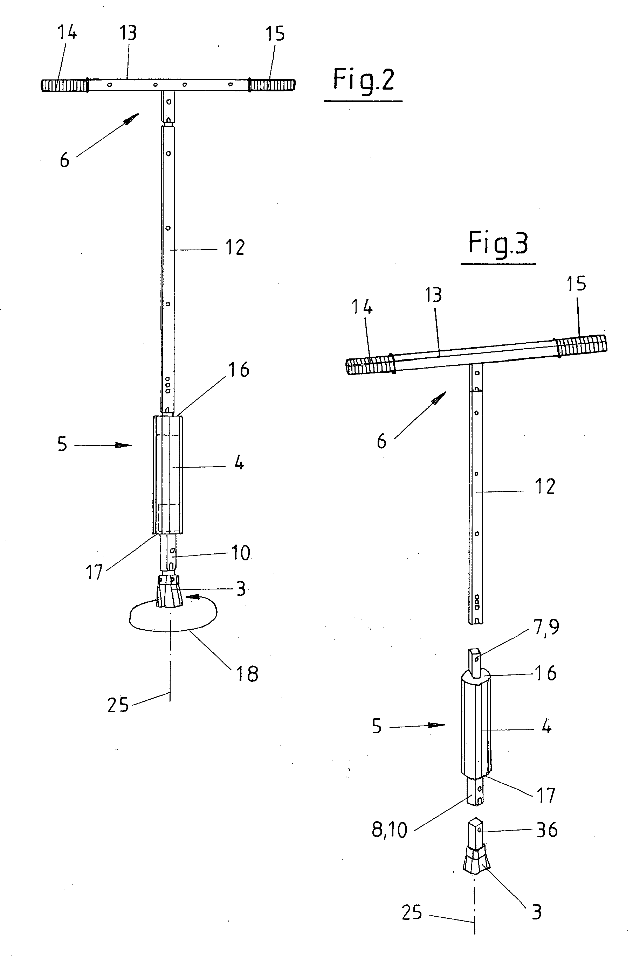

In Figur 2 ist solch ein Schlüssel 1 nochmals dargestellt, ergänzt um den Pfeil 18 zur Veranschaulichung der Rotation der Aufnahme 10 und der Kuppelmuffe 3 um die Längsachse 25 des Gestänges 2 bei entsprechender Betätigung des in dem Gehäuse 4 untergebrachten Antriebs an der Unterseite 5 des Gestänges. Der Weg von Antrieb zu Kuppelmuffe ist damit denkbar kurz, die Energie, die dafür aufgebracht werden muss, entsprechend gering. Das Drehmoment kann leicht und direkt abgefangen werden, die Gefahr von Verletzungen für den Bediener besteht nicht.

In Explosionsdarstellung sind Schlüsselstange 12 und Querstange 13 als erste Baugruppe, Gehäuse 4 und schließlich Kuppelmuffe 3 in Figur 3 dargestellt. Das Gehäuse 4 wird denkbar einfach in die Schlüsselstange 1 bzw. das Gestänge 2 integriert, indem es zugleich als Abschnitt desselben dient. Jeder bereits vorhandene Schlüssel kann damit auch einfach nachgerüstet werden. Zur Erleichterung der Montage weist das Gehäuse 4 an seiner oberen Stirnseite 16 einen hier als Mehrkant 9 ausgebildeten oberen Gestängeabschnitt 7 und an seiner unteren Stirnseite einen als Aufnahme 10 für einen Mehrkant ausgebildeten unteren Gestängeabschnitt 8 auf, d. h. der obere Gestängeabschnitt 7 wird mit der Schlüsselstange 12 und der untere Gestängeabschnitt 8 mit dem Mehrkant 36 verbunden, der wiederum mit der Kuppelmuffe 3 eine gemeinsame Baugruppe bildet. Diese wird passend zum Anschluss ausgewählt und dann im Wege der Rastverbindung jeweils in die Aufnahme 10 eingesetzt. Es werden also bei entsprechender Betätigung des Antriebs nur der untere Gestängeabschnitt 8, der als Aufnahme 10 ausgebildet ist, der darin positionierte Mehrkant 36 und die Kuppelmuffe in Rotation um die Achse 25 versetzt.

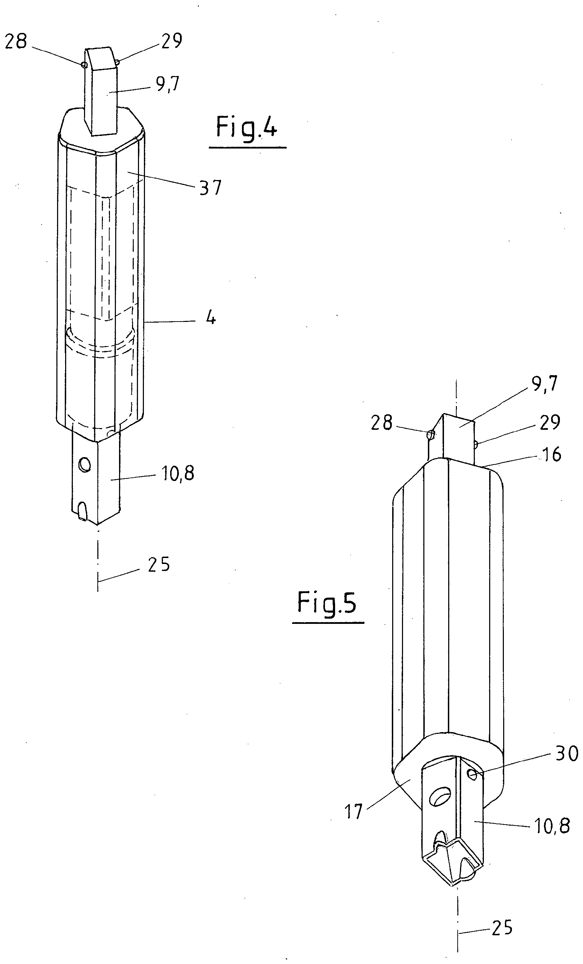

Einen besseren Blick auf bzw. in das Gehäuse veranschaulicht Figur 4. Der obere, als Mehrkant 9 ausgebildete Gestängeabschnitt 7 weist zwei Raststifte 28, 29 auf, der untere Gestängeabschnitt 8 ist als Aufnahme 10 ausgebildet. Das Gehäuse 4 weist in diesem Ausführungsbeispiel eine polygonförmige Außenkontur auf, auf die noch einzugehen sein wird. Mit 37 ist in dem Gehäuse 4 der Akkumulator zur Energieversorgung des Antriebs bezeichnet.

Figur 5 zeigt zusätzlich vor allem den Blick in den als Aufnahme 10 ausgebildeten unteren Gestängeabschnitt 8, in den die hier nicht dargestellte Kuppelmuffe samt Mehrkant einzusetzen ist. Zur endgültigen Verbindung dienen dann wieder Raststifte, von denen hier einer erkennbar und mit dem Bezugszeichen 30 versehen ist.

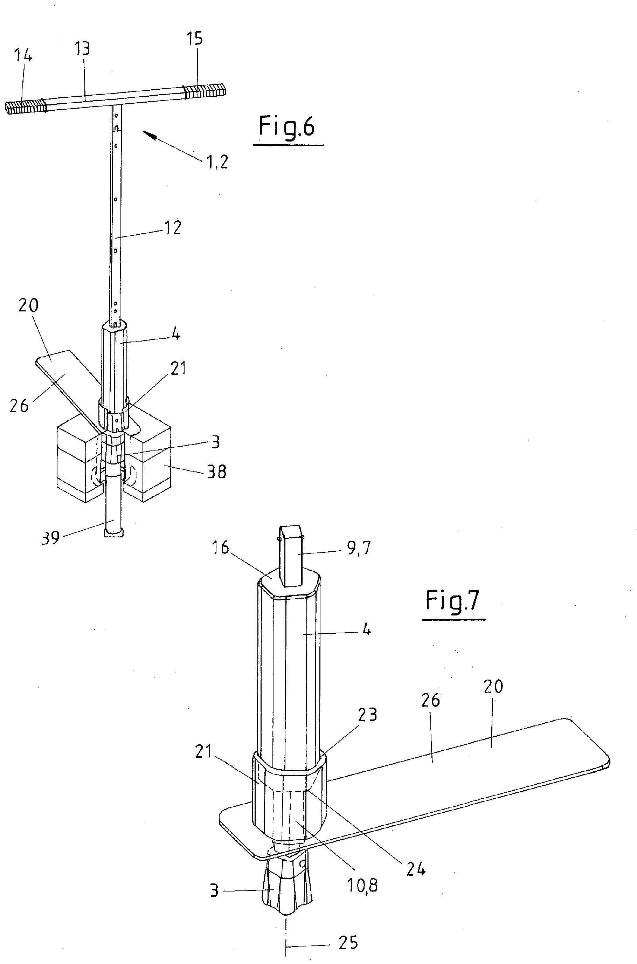

Ein maßgeblicher Vorteil der Erfindung liegt daran, dass der Antrieb besonders kurz ist und damit auch, wie in Figur 6 dargestellt, praktisch in der Straßenkappe 38 verschwindet, sodass entsprechender Schutz vor drehenden Bauteilen besteht. Das Gestänge 2 wird mit der Kuppelmuffe 3 voran auf den Anschluss 39 in der Straßenkappe 31 gesetzt. Ergänzend dazu ist eine Verdrehsicherung 20 mit einer Trittfläche 26 gezeigt, sodass bei Belastung der Trittfläche 26 ein (Mit-) Drehen des Gehäuses 4 verhindert ist. Verantwortlich hierfür ist der Klemmring 21, der zumindest teilweise auf das Gehäuse 4 aufgesetzt ist.

Besser erkennbar ist dieser Mechanismus in Figur 7 mit dem in dieser Darstellung transparent dargestellten Klemmring 21, dessen hier fünfeckige Innenkontur 23 mit der Außenkontur 24 des Gehäuses 4 korrespondiert - beide sind fünfeckig ausgebildet, sodass jegliche Verdrehung des Gehäuses 4 um die Längsachse 25 dank der Verdrehsicherung 20 verhindert ist. Hierzu wird die Verdrehsicherung 20 zweckmäßigerweise von unten auf das Gehäuse 4 aufgeschoben.

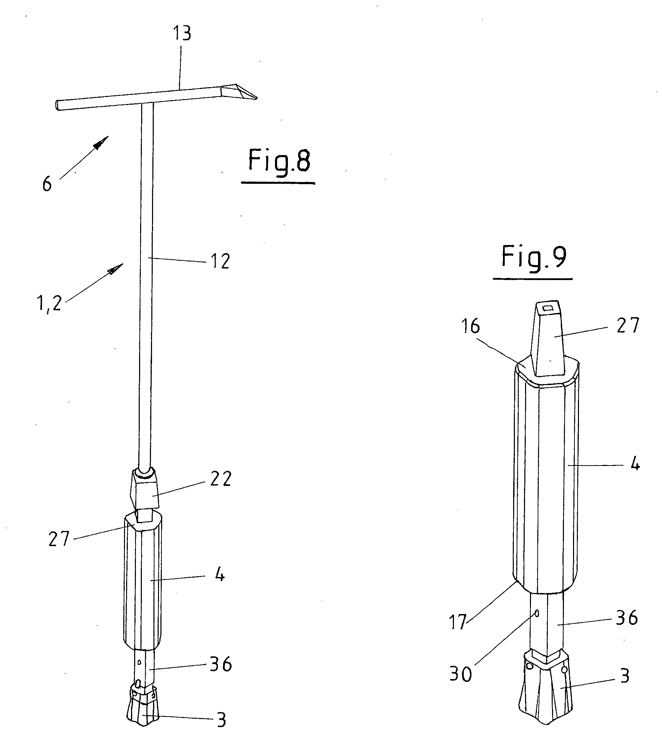

Figur 8 zeigt einen nicht teleskopierbaren Schlüssel 1 mit Quergriff 13 und Schlüsselstange 12. Mit letzterer ist das Gehäuse 4 über eine Steckverbindung verbunden, von der hier die schlüsselseitige Muffe 22 und der gehäuseseitige, konisch zum Gehäuse 4 hin verlaufende Vierkant 27 zu erkennen sind.

Das Gehäuse 4 mit Steckverbindung zeigt dann Figur 9 ohne die eigentliche Schlüsselstange mit dem konisch verlaufenden Vierkant 27 an der oberen Stirnseite 16 des Gehäuses 4. An der unteren Stirnseite 17 sind der Mehrkant 36 und die mit diesem über den Raststift 30 verbundene Kuppelmuffe 3 erkennbar.

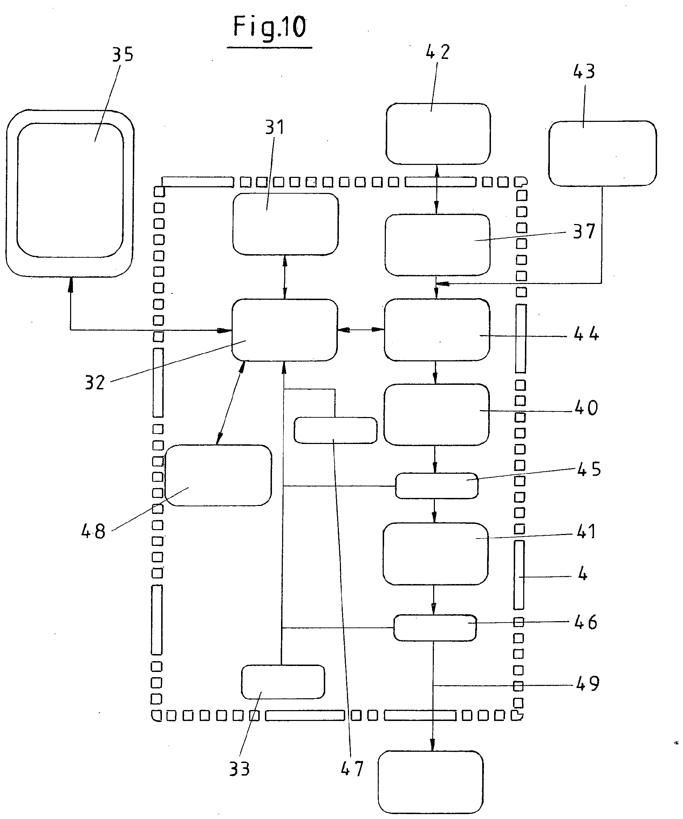

Ein Funktionsdiagramm zeigt Figur 10 zur Veranschaulichung der Funktion der in dem Gehäuse 4 untergebrachten Aggregate. Dabei handelt es sich etwa um eine Sicherheitsschaltung zur Detektion einer Relativbewegung zwischen dem Gehäuse 4 und dem hier nicht gezeigten Gestänge oder einem ebenfalls nicht gezeigten Gestängeabschnitt. Hierzu befindet sich zwischen dem Motor 40 und dem Getriebe 41 ein erster Sensor 45, dessen maßgebliche Aufgabe darin besteht, Drehzahl bzw. -moment zu erfassen, um ggf. auf Schlupf im Getriebe 41 schließen zu können. Ein weiterer Sensor 46 ist dem Getriebe 41 dann nachgeordnet und stellt fest, ob das auf die Armatur ausgeübte Drehmoment mit Sollwerten übereinstimmt. Diese Daten werden an die mit 32 bezeichnete Kommunikationseinheit weitergeleitet. Diese wiederum gibt diese Meldung an die Motorsteuerung 44 und/oder an ein externes Aggregat 35, z. B. einen Rechner weiter. In umgekehrter Richtung kann die Kommunikationseinheit 32 auch externe, z. B. von einem Smartphone übermittelte Daten oder Befehle an die Motorsteuerlogik 44 weiterleiten. Ein dritter Sensor 47 dient als Gyroskop/Beschleunigungssensor, d. h. bei einer Relativbewegung des Gehäuses 4 kommt es ggf. zu einer Sicherheitsabschaltung. Mit 48 ist ein GPS-Modul bezeichnet, auf dessen Daten wiederum die Kommunikationseinheit 32 zurückgreifen kann, um die jeweiligen Armaturen zu identifizieren. Teil der Elektronik ist außerdem eine Speichereinheit 31 zur Dokumentation durchgeführter Umdrehungen und/oder Drehmomente zum Rückschluss auf den Öffnungs- bzw. Schließzustand der jeweiligen Armatur. Zur Stromversorgung dient der Akkumulator 37, der über Kabel oder auch kabellos extern aufgeladen werden kann. Mit 42 ist das Netzteil bezeichnet und mit 43 der Ein-/Aus-Schalter, der beliebig an dem Betätigungsschlüssel 1 angebracht sein kann. Als Überwachungseinheit zur Erfassung akustischer Signale dient ein Mikrophon 33. Sie dient zur Feststellung etwaiger Geräusche im Bereich der Armatur, die auf das Fließen von Wasser oder Strömen von Gas und damit darauf schließen lassen, dass die Armatur nicht vollständig geschlossen ist.

## Patentansprüche

1. Schlüssel (1) zum Verstellen von Absperrventilen, Schiebern und ähnlichen Verschlüssen von im Erdreich verlegten Rohrleitungen, mit einem mit einem Antrieb versehenen, eine Schlüsselstange (12) aufweisenden Gestänge (2), wobei die Schlüsselstange (12) an ihrer Unterseite (5) eine Kuppelmuffe (3) zum Anschluss an das Absperrventil etc. aufweist, und der Antrieb in einem in die Schlüsselstange integrierten Gehäuse angeordnet ist,
**dadurch gekennzeichnet,**
**dass** das Gehäuse (4) an beiden Stirnseiten (16, 17) einen Gestängeabschnitt (7, 8) aufweist.

2. Schlüssel nach Anspruch 1,
**dadurch gekennzeichnet,**
**dass** in dem Gehäuse (4) Motor (40), Getriebe (41), Steuereinheit (44) und/oder Energieversorgung (37) untergebracht sind.

3. Schlüssel nach Anspruch 1,
**dadurch gekennzeichnet,**
**dass** das Gehäuse (4) lösbar mit der Schlüsselstange (12) und/oder der Kuppelmuffe (3) verbunden ist.

4. Schlüssel nach Anspruch 1,
**dadurch gekennzeichnet,**
**dass** die Gestängeabschnitte (7, 8) als Mehrkant (9) oder als Aufnahme (10) für einen Mehrkant ausgebildet ist.

5. Schlüssel nach Anspruch 1,
**dadurch gekennzeichnet,**
**dass** der Antrieb auf den unteren Gestängeabschnitt (8) einwirkt.

6. Schlüssel nach Anspruch 1,
**dadurch gekennzeichnet,**
**dass** Gehäuse (4) und Gestänge (2) und/oder Kuppelmuffe (3) über eine Rastverbindung oder Steckverbindung miteinander verbunden sind.

7. Schlüssel nach Anspruch 1,
**dadurch gekennzeichnet,**
**dass** der Schlüssel (1) mit einer Verdrehsicherung (20) ausgerüstet ist, welche bei Betätigung des Antriebs ein Mitdrehen des Schlüssels (1) bzw. des Gehäuses (4) verhindert.

8. Schlüssel nach Anspruch 7,
**dadurch gekennzeichnet,**
**dass** die Verdrehsicherung (20) einen Klemmring (21) aufweist, dessen Innenkonturen (23) mit den Außenkonturen (24) des Gehäuses (4) korrespondieren.

9. Schlüssel nach Anspruch 7,
**dadurch gekennzeichnet,**
**dass** die Verdrehsicherung (20) in Richtung der Längsachse (25) des Gestänges (2) auf das Gehäuse (4) aufschiebbar ausgebildet ist.

10. Schlüssel nach Anspruch 7,
**dadurch gekennzeichnet,**
**dass** die Verdrehsicherung (20) eine Trittfläche (26) aufweist.

11. Schlüssel nach Anspruch 1,
**dadurch gekennzeichnet,**
**dass** der Schlüssel (1) mit einer Sicherheitsschaltung zur Detektion einer Relativbewegung des Gehäuses (4) ausgerüstet ist.

12. Schlüssel nach Anspruch 1,
**dadurch gekennzeichnet,**
**dass** der Schlüssel (1) mit einer Speichereinheit (31) zur Dokumentation der durchgeführten Umdrehungen und/oder Drehmomente ausgerüstet ist.

13. Schlüssel nach Anspruch 1,
**dadurch gekennzeichnet,**
**dass** der Schlüssel (1) mit einer Überwachungseinheit (33) zur Erfassung akustischer Signale ausgerüstet ist,

14. Schlüssel nach Anspruch 1,
**dadurch gekennzeichnet,**
**dass** der Schlüssel (1) mit einer als Verbindung zu einem externen Aggregat (35) dienenden Kommunikationseinheit (32) ausgerüstet ist.

## Claims

1. Key (1) for adjusting stop valves, slide gates and similar closures of pipelines laid in the earth with a rod (2) fitted with a drive having a key rod (12), whereby the key rod (12) has a coupling sleeve (3) on its underside (5) for connecting to the stop valve etc., and the drive is located in a housing integrated into the key rod,
**characterised in that**
the housing (4) has a rod section (7, 8) at both end faces (16, 17).

2. Key in accordance with claim 1,
**characterised in that**
motor (40), transmission (41), control unit (44) and/or energy supply (37) are accommodated in the housing (4).

3. Key in accordance with claim 1,
**characterised in that**
the housing (4) has a detachable connection to the key rod (12) and/or the coupling sleeve (3).

4. Key in accordance with claim 1,
**characterised in that**
the rod sections (7, 8) are designed as polygons (9) or as holders (10) for a polygon.

5. Key in accordance with claim 4,
**characterised in that**
the drive acts on the lower rod section (8).

6. Key in accordance with claim 1,
**characterised in that**
housing (4) and rod (2) and/or coupling sleeve (3) are connected to one another through a click connection or plug connection.

7. Key in accordance with claim 1,
**characterised in that**
the key (1) is equipped with an anti-rotation device (20) that prevents the key (1) or the housing (4) from rotating as well when the drive is actuated.

8. Key in accordance with claim 7,
**characterised in that**
the anti-rotation device (20) has a clamping ring (21) whose inside contours (23) correspond to the outside contours (24) of the housing (4).

9. Key in accordance with claim 7,
**characterised in that**
the anti-rotation device (20) is designed to be slidable on the housing (4) in the direction of the lengthways axis (25) of the rod (2).

10. Key in accordance with claim 7,
**characterised in that**
the anti-rotation device (20) has a tread (26).

11. Key in accordance with claim 1,
**characterised in that**
the key (1) is equipped with a safety circuit to detect a relative movement of the housing (4).

12. Key in accordance with claim 1,
**characterised in that**
the key (1) is equipped with a memory unit (31) for documenting the revolutions carried out and/or torques.

13. Key in accordance with claim 1,
**characterised in that**
the key (1) is equipped with a monitoring unit (33) for recording acoustic signals.

14. Key in accordance with claim 1,
**characterised in that**
the key (1) is equipped with a communication unit (32) serving as connection to an external assembly (35).

## Revendications

1. Clé (1) destinée à changer le réglage de vannes d'arrêt, tiroirs et fermetures similaires de tuyauteries posées dans la terre, avec une tringlerie (2) présentant une tige de clé (12) et pourvue d'un entraînement, sachant que la tige de clé (12) présente sur sa face inférieure (5) un manchon d'accouplement (3) destiné au raccordement à la vanne d'arrêt etc., et que l'entraînement est disposé dans un boîtier intégré dans la tige de clé,
**caractérisée par le fait**
**que** le boîtier (4) présente une section de tringlerie (7, 8) sur les deux faces frontales (16, 17).

2. Clé selon la revendication 1,
**caractérisée par le fait**
**que** le moteur (40), l'engrenage (41), l'unité de commande (44) et/ou l'alimentation en énergie (37) sont logés dans le boîtier (4).

3. Clé selon la revendication 1,
**caractérisée par le fait**
**que** le boîtier (4) est relié de façon détachable avec la tige de clé (12) et/ou le manchon d'accouplement (3).

4. Clé selon la revendication 1,
**caractérisée par le fait**
**que** les sections de tringlerie (7, 8) ont la forme d'un polygone (9) ou d'une réception (10) destinée à un polygone.

5. Clé selon la revendication 4,
**caractérisée par le fait**
**que** l'entraînement a un effet sur la section de tringlerie (8) inférieure.

6. Clé selon la revendication 1,
**caractérisée par le fait**
**que** le boîtier (4) et la tringlerie (2) et/ou le manchon d'accouplement (3) sont reliés entre eux au moyen d'une liaison encrantée ou d'une connexion enfichable.

7. Clé selon la revendication 1,
**caractérisée par le fait**
**que** la clé (1) est équipée d'une sécurité anti-torsion (20) qui empêche que la clé (1) et le boîtier (4) ne tourne en même temps que l'entraînement lorsqu'on actionne ce dernier.

8. Clé selon la revendication 7,
**caractérisée par le fait**
**que** la sécurité anti-torsion (20) présente une bague de serrage (21) dont les contours internes (23) correspondent aux contours externes (24) du boîtier (4).

9. Clé selon la revendication 7,
**caractérisée par le fait**
**que** la sécurité anti-torsion (20) est conçue de façon à pouvoir être poussée sur le boîtier (4) dans le sens de l'axe longitudinal (25) de la tringlerie (2).

10. Clé selon la revendication 7,
**caractérisée par le fait**
**que** la sécurité anti-torsion (20) présente un marchepied (26).

11. Clé selon la revendication 1,
**caractérisée par le fait**
**que** la clé (1) est équipée d'une commutation de sécurité destinée à la détection d'un mouvement relatif du boîtier (4).

12. Clé selon la revendication 1,
**caractérisée par le fait**
**que** la clé (1) est équipée d'une unité de mémoire (31) destinée à documenter les tours et/ou les couples de serrage exécutés.

13. Clé selon la revendication 1,
**caractérisée par le fait**
**que** la clé (1) est équipée d'une unité de surveillance (33) destinée à capter les signaux acoustiques.

14. Clé selon la revendication 1,
**caractérisée par le fait**
**que** la clé (1) est équipée d'une unité de communication (32) servant à la connexion avec un groupe externe (35).
